# EUROPEAN PATENT APPLICATION

(11) **EP 4 789 805 A1**
(43) Date of publication of application: **12.08.2026**
(21) Application number: 25156945.5
(22) Date of filing: 10.02.2025
(51) Int. Cl.: B23K 11/00, B23K 11/11, B23K 11/18, B23K 11/20, B23K 11/24, B23K 11/25, B23K 101/00, B23K 103/20

(54) **METHOD FOR CONTROLLING A RESISTANCE ELEMENT WELDING PROCESS, DATA PROCESSING APPARATUS, COMPUTER PROGRAM, COMPUTER-READABLE STORAGE MEDIUM, AND RESISTANCE WELDING APPARATUS**

(71) Applicant: Volvo Car Corporation, 405 31 Göteborg (SE)
(72) Inventor: DURMAZ, Kürsat, 40531 Göteborg (SE); EVERTSSON, Sune, 40531 Göteborg (SE); ANDERSSON, Benny, 40531 Göteborg (SE); OLSSON, Martin, 40531 Göteborg (SE); LINDAHL, Per, 40531 Göteborg (SE); LUNDGREN, Per Joel, 40531 Göteborg (SE)
(74) Representative: Kransell & Wennborg KB

(57) **Abstract**

The disclosure relates to a method for controlling a resistance element welding process. The method comprises obtaining first data (D1) indicative of an electric resistance of an assembly (46) to be welded. The electric resistance is measured between a first welding electrode (12) and a second welding electrode (14). The method further comprises comparing the first data (D1) to a resistance range, and causing or permitting resistance element welding of the assembly (46) to be welded if the first data (D1) is within the resistance range. Moreover, the disclosure is directed to a data processing apparatus (32), to a computer program (40) and to a computer-readable storage medium (38) for performing the method. Furthermore, the disclosure provides a resistance element welding apparatus (10).

## Description

### TECHNICAL FIELD

The present disclosure relates to a method for controlling a resistance element welding process.

Moreover, the present disclosure is directed to a data processing apparatus, to a computer program and to a computer-readable storage medium for carrying out a method for controlling a resistance element welding process.

Furthermore, the present disclosure provides a resistance welding apparatus.

### BACKGROUND ART

Welding is an established technique for firmly joining constructional parts of meltable material, e.g. metals or thermoplastics, to one another.

However, difficulties arise when constructional parts of two different meltable materials shall be joined by welding. This may be of particular relevance when a metal body shall be manufactured that comprises high stiffness and strength in dedicated areas while at the same time lightweight targets shall be met.

Manufacturing a body of a vehicle, in particular of an automobile, is an example in which parts made of different metals need to be firmly joined. Typically, high-strength steel is used in areas of the vehicle body where high stiffness and strength is required. Aluminum is used in other areas of the vehicle body in order to keep an overall weight of the vehicle body low.

In order to be able to firmly join constructional parts that are made up of different types of metals to one another, the so-called resistance element welding process may be used. In this process, a resistance element, which is also referred to as fastener, is punched through SE:TOP
a first metal sheet of a first metal material. Thus, a strong mechanical connection between the resistance element and the first metal sheet is established. After that, a second metal sheet of a second metal material is aligned with the first metal sheet. The material of the resistance element is the same as or at least similar to the material of the second metal sheet. In the aligned state of the first metal sheet and the second metal sheet, the resistance element is in contact with the second metal sheet. By performing resistance spot welding for welding the resistance element to the second metal sheet, the first metal sheet is indirectly joined to the second metal sheet via the resistance element. Hence, a firm joint between metal parts of different types of metals may be established without melting both types of metal. Instead, only the material of the resistance element and of the second metal sheet are actually melted and thereby welded to each other.

Inherent to this process is a difficulty to find an exact spatial position of the resistance element for performing resistance spot welding. Especially in case a large assembly, for example a body of a vehicle, needs to be manufactured, geometrical tolerances of each part and each joint between the parts of the body may add up such that an actual position of the resistance element that has been punched into the first metal sheet prior to welding may differ from an expected position of the resistance welding element.

However, applying resistance spot welding at the exact spatial position of the resistance element is crucial for achieving a high quality joint between the resistance element and the second metal sheet.

### SUMMARY

It is therefore an objective of the present disclosure to provide an improved method for controlling a resistance element welding process that can solve or alleviate the above-mentioned problem.

The problem is at least partially solved or alleviated by the subject matter of the independent claims of the present disclosure, wherein further examples are incorporated in the dependent claims.

According to a first aspect, there is provided a method for controlling a resistance element welding process. The method comprises:
- obtaining first data indicative of an electric resistance of an assembly to be welded,
- comparing the first data to a resistance range, and
- causing or permitting resistance element welding of the assembly to be welded if the first data is within the resistance range.

Obtaining the first data indicative of the electric resistance is to be understood as receiving or determining the first data. The electric resistance may be measured between a first welding electrode and a second welding electrode used for resistance element welding. In an example, the assembly to be welded may comprise a first sheet of a first metal material and a second sheet of a second metal material. Moreover, the assembly to be welded may comprise a resistance element that is punched through the first sheet. The resistance element may also be referred to as a fastener. In the punched-through state, the resistance element may abut against the first sheet and may contact the second sheet. During the resistance element welding process, the assembly to be welded is clamped between the first welding electrode and the second welding electrode. More specifically, the first welding electrode may contact the resistance element and the second welding electrode may contact the second sheet. Thus, the electric resistance that may be measured between the first welding electrode and the second welding electrode may particularly comprise a first electric contact resistance of a first interface between the first welding electrode and the resistance element, a second electric contact resistance of a second interface between the resistance element and the second sheet as well as a third electric contact resistance of a third interface between the second sheet and the second welding electrode.

The electric resistance may be different depending on whether the first welding electrode contacts the resistance element in an intended spot, i.e. in a desired position, or not. The intended spot is typically a center of a surface of the resistance element facing away from the first sheet and/or away from the second sheet. Thus, if the first welding electrode contacts the resistance element in the intended spot, the electric resistance that may be measured between the first welding electrode and the second welding electrode may be of a characteristic value, i.e. an optimal value. The characteristic value may be described by the above-introduced resistance range. The resistance range is to be understood as an interval of resistance values between a lower boundary and an upper boundary. The resistance range may be predefined, for example from a plurality of resistance measurements of assemblies that comprise the same or at least similar types of materials and/or dimensions as the assembly to be welded, e.g. the first sheet, the second sheet and/or the resistance element. Hence, if the electric resistance of the assembly to be welded measured between the first welding electrode and the second welding electrode right before performing resistance element welding of the assembly to be welded is within the resistance range, resistance element welding of the assembly to be welded is caused or permitted, i.e. triggered. Causing or permitting resistance element welding of the assembly to be welded if the first data indicative of the electric resistance of the assembly to be welded is within the resistance range has the effect that a desired quality of the weld may be reached. The desired quality of the weld may particularly refer to a desired size of a weld nugget that is formed between the resistance element and the second sheet. The weld nugget is created from material of the resistance element and from material of the second sheet that is melted during the resistance element welding process and that solidifies afterwards, thereby forming a firm joint between the resistance element and the second sheet that is able with withstand desired loads. Thus, the desired weld quality may also be referred to as an optimum weld quality.

In an example, the method further comprises:
- comparing the first data to a resistance threshold, wherein the resistance threshold is outside the resistance range, and
- causing adjustment of a process parameter of the resistance element welding process if the first data is between the resistance threshold and a boundary of the resistance range that is closest to the resistance threshold.

The resistance threshold may be a predefined resistance threshold. Like the resistance range, the resistance threshold may be determined from a plurality of resistance measurements of assemblies that comprise the same or at least similar types of materials and/or dimensions as the assembly to be welded, e.g. the first sheet, the second sheet and/or the resistance element. However, when determining the resistance threshold, the first electrode may contact the resistance element in a position that is offset from the intended spot, i.e. offset from the desired position. Additionally or alternatively, a contact resistance between the welding electrodes and the assembly to be welded or between the resistance element and the second sheet may be increased due to a corrosive layer or an oil film or decreased due to deformed welding electrodes/resistance elements and therefore increased contact surfaces. Still, analyses of the weld established between the resistance element and the second sheet may reveal an acceptable weld quality even though the measured resistance does not fall within the resistance range. The resistance threshold thus characterizes a transition point from an acceptable weld quality to an unacceptable weld quality that may be expected based on a result of a resistance measurement between the first welding electrode and the second welding electrode when both electrodes contact the assembly to be welded prior to welding. It has been observed that an expected quality of the weld can even be improved from an acceptable weld quality to a good weld quality if a resistance measurement of the assembly to be welded yields a resistance value that is between the resistance threshold and the resistance range. The resistance threshold being outside the resistance range means that the resistance threshold may be inferior to the lower boundary of the resistance range or greater than the upper boundary of the resistance range. Moreover, there may be a resistance threshold on either side of the resistance range. In this case, it is understood that a difference between a resistance threshold inferior to the resistance range and the lower boundary of the resistance range may be equal to or different from a difference between a resistance threshold greater than the resistance range and the upper boundary of the resistance range. If a resistance threshold is below the resistance range, an expected quality of the weld can be improved if the resistance value measured between the first welding electrode and the second welding electrode is between the resistance threshold and the lower boundary of the resistance range. If a resistance threshold is above the resistance range, an expected quality of the weld can be improved if the resistance value measured between the first welding electrode and the second welding electrode is between the resistance threshold and the upper boundary of the resistance range. In a particular example of the first electrode contacting the resistance element in a position that is offset from the intended spot, i.e. offset from the desired position, it may be expected that the obtained first data is above the resistance threshold but inferior to a resistance threshold that is above the resistance range. In short, it has been observed that an expected quality of the weld can be improved if the resistance value measured between the first welding electrode and the second welding electrode is between the resistance threshold and the boundary of the resistance range that is closest to the resistance threshold. The improvement of the weld quality may be achieved by the adjustment of a process parameter of the resistance element welding process, which will be explained in the following.

In an example, adjusting a process parameter comprises modifying a target welding current. This may comprise increasing or decreasing the target welding current. The target welding current is an amount of electric current that a control unit for the resistance element welding process may aim for providing to the assembly to be welded via the first welding electrode and the second welding electrode. The target welding current may depend on the electric resistance measured between the first welding electrode and the second welding electrode prior to welding of the assembly to be welded. A look-up table may be provided within the control unit that comprises information on which target welding current to choose depending on the electric resistance measured between the first welding electrode and the second welding electrode prior to welding of the assembly to be welded. Adjusting the target welding current to the measured electric resistance allows improving the quality of the weld to be formed. For example, if a resistance is measured that is above the resistance range but below the resistance threshold, an increased target welding current may be provided in order to overcome the elevated resistance of the assembly to be welded and, thus, in order to still achieve a weld nugget of the desired size or at least of a sufficient size. In another example, if a resistance is measured that is below the resistance range but above the resistance threshold, a lower target welding current may be provided in order to account for the reduced resistance of the assembly to be welded and, thus, in order to prevent excessive melting and/or thermal weakening of parts of the assembly to be welded. In general, it can be said that by modifying the target welding current, a maximum reachable temperature within the assembly to be welded can be adjusted.

In an example, adjusting a process parameter comprises modifying a length of a time period during which the welding current is provided. Modifying the length of the time period during which the welding current is provided comprises shortening or lengthening the respective time period. By modifying the length of time during which the welding current is provided to the assembly to be welded, an amount of energy that is provided to the assembly to be welded may be adjusted without changing the welding current. This may be of particular interest if the assembly to be welded comprises comparatively thin sheets. Thin metal sheets may burn through if excessively high welding currents are provided. In order to still achieve a good weld quality, the length of the time period during which the welding current is provided to the assembly to be welded may be increased. Moreover, if an increased/decreased welding current is provided to the assembly to be welded and the length of the time period during which the increased/decreased welding current is provided is lengthened/shortened, an intended effect of modifying the amount of energy provided to the assembly to be welded can even be leveraged. In general, the time period during which the welding current is provided is shortened if the resistance of the assembly to be welded that is measured between the first welding electrode and the second welding electrode is between the lower boundary of the resistance range and the resistance threshold. This has the effect that excessive melting and/or deforming of parts of the assembly to be welded is prevented despite the reduced resistance of the assembly to be welded. Correspondingly, the time period during which the welding current is provided is lengthened if the resistance of the assembly to be welded that is measured between the first welding electrode and the second welding electrode is between the upper boundary of the resistance range and the resistance threshold. This has the effect that a sufficient size of the weld nugget may be maintained despite the increased resistance of the assembly to be welded. A look-up table may be provided on the control unit for the resistance element welding process comprising information on which length of time period to choose for providing the welding current depending on the electric resistance measured between the first welding electrode and the second welding electrode prior to welding of the assembly to be welded.

In an example, adjusting a process parameter comprises adjusting a spatial position of the first welding electrode and/or of the second welding electrode. In particular, the spatial position of the first welding electrode and/or of the second welding electrode may be adjusted with respect to the resistance element. As has been explained above, a resistance of the assembly to be welded measured between the first welding electrode and the second welding electrode may differ from the desired resistance range if the first welding electrode and/or the second welding electrode do not contact the resistance element in the intended spot, which is usually the center of the surface of the resistance element that faces away from the first sheet and/or from the second sheet. Thus, by adjusting a spatial position of the first welding electrode and/or of the second welding electrode with respect to the resistance element, the first welding electrode and/or the second welding electrode may be moved towards the center of the surface of the resistance element that faces away from the first sheet and/or from the second sheet. Thus, a resistance between the first welding electrode and the second welding electrode that falls within the resistance range may be achieved even though the resistance element was not contacted by a welding electrode in the intended spot at first. It is understood that the first welding electrode or the second welding electrode may be moved in sync with the respective other welding electrode, i.e. the spatial position of both the first welding electrode and the second welding electrode are adjusted. This may be achieved by the first welding electrode and the second welding electrode being mounted to welding tongs, i.e. a welding gun. The welding gun may be of an X-type welding gun or of a C-type welding gun.

In an example, a direction of adjusting the spatial position of the first welding electrode and/or of the second welding electrode is based on a development of the first data over at least two spatial positions of the first welding electrode and/or the second welding electrode relative to the resistance range. The adjustment of the spatial position of the first welding electrode and/or of the second welding electrode may be conducted under permanent measurement, i.e. monitoring, of the resistance of the assembly to be welded between the first welding electrode and the second welding electrode. If the measured resistance develops further away from the desired resistance range as the spatial position of the first welding electrode and/or if the second welding electrode is adjusted, a direction of adjusting the spatial position of the first welding electrode and/or of the second welding electrode may be reversed or at least modified. A permanent resistance measurement may only be conducted under the condition that contact between the assembly to be welded and both welding electrodes is maintained during adjusting the spatial position of the first welding electrode and/or of the second welding electrode (continuous movement). However, in an alternative, it is conceivable that the spatial position of the first welding electrode and/or of the second welding electrode is adjusted in incremental steps (discontinuous movement) between which a contact of at least one of the first welding electrode and the second welding electrode to the assembly to be welded is released. In this alternative, a resistance measurement of the assembly to be welded may only be conducted upon completion of an incremental adjustment step of the spatial position of the first welding electrode and/or if the second welding electrode. Still, a direction of a following incremental adjustment step with respect to a previous incremental adjustment step maybe adjusted depending on a development of the measured resistance between before and after completion of the previous incremental adjustment step.

Additionally or alternatively, an incremental step size or a speed of movement in adjusting the spatial position of the first welding electrode and/or of the second welding electrode is based on a development of the first data over at least two spatial positions of the first welding electrode and/or the second welding electrode relative to the resistance range. If a deviation of the measured resistance of the assembly to be welded from the desired resistance range is comparatively large, an incremental step size or a speed of continuous movement in adjusting the spatial position of the first welding electrode and/or of the second welding electrode may be increased in order to reach a spatial position of the first welding electrode and/or of the second welding electrode that results in a measured resistance within or at least close to the desired resistance range more quickly. If a deviation of the measured resistance of the assembly to be welded from the desired resistance range is comparatively small, an incremental step size or a speed of continuous movement in adjusting the spatial position of the first welding electrode and/or of the second welding electrode may be reduced in order not to overshoot a position of the first welding electrode and/or of the second welding electrode that results in a measured resistance within or at least close to the desired resistance range.

In an example, the method further comprises:
- obtaining second data indicative of a distance between the first welding electrode and the second welding electrode.

In general, the distance between the first welding electrode and the second welding electrode reflects a thickness of the assembly to be welded that is clamped between the first welding electrode and the second welding electrode. Thus, in a typical example in which the first welding electrode and the second welding electrode are comprised in welding tongs, the distance between the first welding electrode and the second welding electrode only refers to a state in which the welding tongs are closed and thus clamp a material between the first welding electrode and the second welding electrode. During flawless resistance element welding in which the first welding electrode or the second welding electrode contacts the resistance element, the distance between the first welding electrode and the second welding electrode is defined by the thickness of the resistance element and the thickness of the second sheet. This is because the resistance element that is punched through the first sheet sticks out from the first sheet at least on one side of the first sheet that faces away from the second sheet. On the other side of the first sheet, which faces the second sheet, the resistance element at least flushes with the first sheet or even sticks out from the first sheet as well. In case neither the first welding electrode nor the second welding electrode contact the surface of the resistance element that faces away from the first sheet and/or from the second sheet, the distance between the first welding electrode and the second welding electrode is defined by the thickness of the first sheet and the thickness of the second sheet. In this case, the distance between the first welding electrode and the second welding electrode is smaller than said distance during flawless resistance element welding. Thus, obtaining second data indicative of the distance between the first welding electrode and the second welding electrode enables determining if the resistance element is properly clamped between the first welding electrode and the second welding electrode.

In an example, the method further comprises:
- comparing the second data to a distance range, and
- increasing a pressure and/or a force applied by the first welding electrode and/or by the second welding electrode onto the assembly to be welded if the second data is within the distance range and if the first data is outside and above an interval between the resistance threshold and a boundary of the resistance range that is furthest from the resistance threshold.

The distance range may be a predefined distance range. The distance range may be defined by a typical range of thickness of the assembly to be welded, i.e. a thickness of the resistance element and a thickness of the second sheet. If the second data is within the distance range, it may be assumed that the resistance element is clamped between the first welding electrode and the second welding electrode. Thus, in principle, the spatial position of the first welding electrode and/or of the second welding electrode relative to the resistance element allows conducting resistance element welding. However, if the first data is neither within the resistance range nor between the resistance range and a resistance threshold that is above the resistance range (i.e. outside and above an interval between the resistance threshold and a boundary of the resistance range that is furthest from the resistance threshold), it may be the case that there is insufficient electric contact between the welding electrodes and the assembly to be welded. This may be due a conductive barrier like a corrosive layer or an oil film formed on the resistance element or on the second sheet. The conductive barrier may create a nonconductive or a poorly conductive interface between the welding electrodes and the assembly to be welded. The conductive barrier may be broken by applying a greater amount of compression force to the assembly to be welded via the first welding electrode and/or the second welding electrode. Thus, sufficient electric contact between the welding electrodes and the assembly to be welded may be established, thereby bringing the first data indicative of the resistance of the assembly to be welded measured between the first welding electrode and the second welding electrode into the desired range or at least within a range between the resistance threshold and the resistance range. If the measured resistance can be brought into the resistance range, resistance element welding may be caused or permitted, i.e. triggered. If the measured resistance range can be brought to a value between the resistance threshold and the resistance range, process parameters may be adjusted as explained above in order to further improve an expected weld quality.

In an example, the method is abandoned prior to performing resistance element welding of the assembly to be welded if at least one of the following conditions is met:
- the first data is outside the interval between the resistance threshold and a boundary of the resistance range that is furthest from the resistance threshold, or
- the second data is outside the distance range.

The expression of the first condition of the first data being outside the interval between the resistance threshold and a boundary of the resistance range that is furthest from the resistance threshold covers alternatives in which the resistance threshold is below the resistance range, alternatives in which the resistance threshold is above the resistance range and alternatives in which there is a resistance threshold on either side of the resistance range. The expression means that the electric resistance of the assembly to be welded measured between the first welding electrode and the second welding electrode is neither within the resistance range nor within an interval between the resistance range and the resistance threshold. In a particular example of the first welding electrode not contacting the resistance element, i.e. missing the resistance element and only contacting the first sheet, it may be expected that the first data is outside the resistance range and below a resistance threshold that is below the resistance range. If the first condition is met, resistance element welding may not be caused or permitted, i.e. not triggered. In one example, the pressure and/or the force applied by the first welding electrode and/or the second welding electrode may be increased in a manner as explained two paragraphs above in order to try to bring be measured resistance into the interval between the resistance threshold and a boundary of the resistance range that is furthest from the resistance threshold. In another example, resistance element welding may not be caused or permitted at all. In case the second data is outside the distance range, this may indicate that the resistance element is not clamped between the first welding electrode and the second welding electrode, that there is a foreign obstacle clamped between the first welding electrode and the second welding electrode, that the resistance element has not been punched properly through the first sheet or that welding tongs, to which the first welding electrode and the second welding electrode may be mounted, encounter a difficulty in closing. In any of these cases, it would not be sensible to try to cause or permit resistance element welding. Instead, an inspection of the assembly to be welded, of the first welding electrode and/or of the second welding electrode, or of welding tongs is indicated. Therefore, if the second condition of the second data being outside the distance range is met, resistance element welding is not caused or permitted at all or at least until the outlined malfunctions are remedied. However, as a general note, it will be appreciated that once resistance element welding has been caused or permitted, i.e. triggered, the process is not abandoned in the sense of stopped or interrupted if the first condition or the second condition occurs during the process of welding. This is because it is a usual phenomenon that an electric resistance of the assembly to be welded strongly fluctuates during performing the process of resistance element welding because of heat dependent resistances of the resistance element and of the second sheet. Moreover, a distance between the first welding electrode and the second welding electrode may change during performing the process of resistance element welding due to thermal expansion of the assembly to be welded.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the first aspect. Providing such a data processing apparatus allows obtaining, i.e. receiving or determining, first data indicative of an electric resistance between a first welding electrode and a second welding electrode right before performing resistance element welding of an assembly to be welded. If the obtained electric resistance is within a resistance range, resistance element welding of the assembly to be welded is caused or permitted, i.e. triggered, by the data processing apparatus. Causing or permitting resistance element welding of the assembly to be welded if the first data indicative of the electric resistance of the assembly to be welded is within the resistance range has the effect that a desired quality of the weld may be reached. The desired quality of the weld may particularly refer to a desired size of a weld nugget that is formed between the resistance element and the second sheet. The weld nugget is created from material of the resistance element and from material of the second sheet that is melted during the resistance element welding process and that solidifies afterwards, thereby forming a firm joint between the resistance element and the second sheet that is able with withstand desired loads. Thus, the desired weld quality may also be referred to as an optimum weld quality.

According to a third aspect, there is provided a computer program comprising instructions which, when the program is executed by a computer, cause the computer to carry out the method of the first aspect. Providing such a computer program apparatus allows obtaining, i.e. receiving or determining, first data indicative of an electric resistance between a first welding electrode and a second welding electrode right before performing resistance element welding of an assembly to be welded. If the obtained electric resistance is within a resistance range, resistance element welding of the assembly to be welded is caused or permitted, i.e. triggered, by the computer program. Causing or permitting resistance element welding of the assembly to be welded if the first data indicative of the electric resistance of the assembly to be welded is within the resistance range has the effect that a desired quality of the weld may be reached. The desired quality of the weld may particularly refer to a desired size of a weld nugget that is formed between the resistance element and the second sheet. The weld nugget is created from material of the resistance element and from material of the second sheet that is melted during the resistance element welding process and that solidifies afterwards, thereby forming a firm joint between the resistance element and the second sheet that is able with withstand desired loads. Thus, the desired weld quality may also be referred to as an optimum weld quality.

According to a fourth aspect, there is provided a computer-readable storage medium comprising instructions which, when executed by a computer, cause the computer to carry out the method of the first aspect. Providing such a computer-readable storage medium allows obtaining, i.e. receiving or determining, first data indicative of an electric resistance between a first welding electrode and a second welding electrode right before performing resistance element welding of an assembly to be welded. If the obtained electric resistance is within a resistance range, resistance element welding of the assembly to be welded is caused or permitted, i.e. triggered, by the instructions comprised on the computer-readable storage medium. Causing or permitting resistance element welding of the assembly to be welded if the first data indicative of the electric resistance of the assembly to be welded is within the resistance range has the effect that a desired quality of the weld may be reached. The desired quality of the weld may particularly refer to a desired size of a weld nugget that is formed between the resistance element and the second sheet. The weld nugget is created from material of the resistance element and from material of the second sheet that is melted during the resistance element welding process and that solidifies afterwards, thereby forming a firm joint between the resistance element and the second sheet that is able with withstand desired loads. Thus, the desired weld quality may also be referred to as an optimum weld quality.

According to a fifth aspect, there is provided a resistance welding apparatus comprising:
- a first welding electrode,
- a second welding electrode,
- a resistance measuring unit connected to the first welding electrode and to the second welding electrode for providing first data indicative of an electric resistance of an assembly to be welded, and
- a data processing apparatus according to the second aspect.
The data processing apparatus is communicatively connected to the resistance measuring unit.

The first welding electrode and the second welding electrode are configured to provide electric current to the assembly to be welded by contacting the assembly to be welded. The assembly to be welded comprises a first sheet, a second sheet and a resistance element. By providing electric current to the assembly to be welded, heat may be created at an interface between the second sheet in the resistance element. As a result of the heat created, the second sheet in the resistance element may at least partially melt, thereby forming a firm joint between the resistance element and the second sheet upon solidification of the melt. The resistance measuring unit is configured to measure an electric resistance of the assembly to be welded upon contact of the first welding electrode and the second welding electrode to the assembly to be welded. It is emphasized that the electric resistance measured by the resistance measuring unit is measured prior to causing or permitting, i.e. triggering, or performing resistance element welding. By measuring said electric resistance prior to causing or permitting resistance element welding, it may be checked if said electric resistance is within a resistance range within which a desired optimum weld quality may be expected to be obtained. The electric resistance of the assembly to be welded may vary depending on a spatial position of the first welding electrode and/or of the second welding electrode with respect to the resistance element. Moreover, resistive barrier layers such as corrosive layers and/or oil firms on the resistance element and/or on the second sheet may cause a deviation of the electric resistance of the assembly to be welded from the desired resistance range. Having the resistance measuring unit comprised in the resistance welding apparatus together with the data processing apparatus allows performing resistance element welding only when the optimum weld quality can be expected based on the electric resistance of the assembly to be welded.

In an example, the resistance welding apparatus further comprises a process parameter adjustment unit. The process parameter adjustment unit is communicatively connected to the data processing apparatus. The process parameter adjustment unit may be capable of adjusting a target welding current that is aimed by the data processing apparatus to be provided to the assembly to be welded via the first welding electrode and the second welding electrode. In this case, the process parameter adjustment unit may form part of the data processing apparatus. Additionally or alternatively, the process parameter adjustment unit may be capable of adjusting a time period during which the welding current is provided to the assembly to be welded via the first welding electrode and the second welding electrode. Also in this case, the process parameter adjustment unit may form part of the data processing apparatus. Further additionally or alternatively, the process parameter adjustment unit may be capable of adjusting a spatial position and/or orientation of the first welding electrode and/or of the second welding electrode with respect to the resistance element. In this case, the process parameter adjustment unit may further comprise welding tongs to which the first welding electrode and the second welding electrode are mounted. Moreover, the welding tongs may be mounted to a robotic arm having at least one translatory and/or at least one rotatory degree of freedom in movement. In an example, the robot arm is a six axis arm having three translatory degrees of freedom and three rotatory degrees of freedom in movement. Further additionally or alternatively, the process parameter adjustment unit may be configured to adjust the pressure and/or a force that may be exercised by the first welding electrode and/or by the second welding electrode onto the assembly to be welded. Also in this case, the process parameter adjustment unit may further comprise welding tongs to which the first welding electrode and the second welding electrode are mounted. Having a process parameter adjustment unit in the resistance element welding apparatus allows adjusting process parameters should the electric resistance of the assembly to be welded obtained prior to welding not fall within the desired resistance range. By adjusting the above described process parameters, an improved, i.e. good, weld quality may still be achieved even though the obtained electric resistance of the assembly to be welded is not optimal. Thus, a suboptimal electric resistance of the assembly to be welded may, at least in part, be compensated by the outlined process parameter adjustments.

In an example, the resistance welding apparatus further comprises a distance measuring unit for providing second data indicative of a distance between the first welding electrode and the second welding electrode. The distance measuring unit is communicatively connected to the data processing apparatus. The distance measuring unit may be directly attached to the first welding electrode and/or to the second welding electrode. Alternatively, the distance measuring unit may be attached to welding tongs to which the first welding electrode and the second welding electrode are mounted. The distance measuring unit may therefore either directly or indirectly indicate a distance between the first welding electrode and the second welding electrode. The distance measuring unit may comprise a laser range finder, an ultrasonic distance sensor, a radar distance sensor and/or the like. Providing a distance measuring unit as part of the resistance element welding apparatus allows obtaining second data indicative of the distance between the first welding electrode and the second welding electrode particularly at the time of obtaining the resistance measurement of the assembly to be welded prior to welding. The obtained distance between the first welding electrode and the second welding electrode may be compared to a desired distance range. Resistance element welding may not be cost or permitted, i.e. not triggered, if the obtained distance is outside the desired distance range. This may be due to foreign objects clamped between the first welding electrode and the second welding electrode or due to the resistance element not being punch properly into the first sheet of the assembly to be welded. In other cases in which the obtained distance is within the desired distance range, which indicates that the resistance element is properly clamped between the first welding electrode and the second welding electrode, but the obtained electric resistance of the assembly to be welded is outside the desired resistance range, process parameters like pressure and/or the force applied by the first welding electrode and/or by the second welding electrode may be adjusted in order to still achieve a good weld quality. Adjusting these process parameters may be helpful in order to improve an electric contact between the welding electrodes and the assembly to be welded. In welding apparatuses that comprise both the resistance measuring unit and the distance measuring unit, cases of insufficient electric contact between the welding electrodes and the assembly to be welded may be reliably detected in suitable countermeasures as outlined above may be introduced in order to still achieve a good weld quality.

It should be noted that the above examples may be combined with each other irrespective of the aspect involved. Accordingly, the method may be combined with structural features of the resistance welding apparatus and, likewise, the resistance welding apparatus may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: illustrates resistance element welding of an assembly to be welded using a resistance welding apparatus according to the present disclosure, wherein the resistance welding apparatus comprises a data processing apparatus according to the present disclosure, a computer program according to the present disclosure and a computer-readable storage medium according to the present disclosure,
- Figure 2: shows an aluminum sheet,
- Figure 3: shows a steel fastener having been punched through the aluminum sheet of Figure 2,
- Figure 4: shows an assembly to be welded by resistance element welding, wherein the assembly comprises a steel sheet positioned adjacent to the aluminum sheet of Figure 3, thereby forming the assembly to be welded of Figure 1,
- Figure 5: illustrates a configuration of the assembly to be welded of Figure 4 and welding electrodes of the resistance welding apparatus of Figure 1, wherein the welding electrodes are eccentric to the steel fastener but one of the welding electrodes is still in contact with the steel fastener,
- Figure 6: illustrates a configuration of the assembly to be welded of Figure 4 and welding electrodes of the resistance welding apparatus of Figure 1, wherein the welding electrodes are eccentric to the steel fastener to such an extent that none of the welding electrodes is in contact with the steel fastener,
- Figure 7: shows a first data indicative of an electric resistance of the assembly to be welded of Figure 4 on a number bar, wherein a first predefined resistance range and two examples of a second predefined resistance threshold are drawn-in, and
- Figure 8: schematically shows steps of a method for controlling a resistance element welding process according to the present disclosure.

### DETAILED DESCRIPTION

The Figures are merely schematic representations and serve only to illustrate examples of the disclosure. Identical or equivalent elements are in principle provided with the same reference signs.

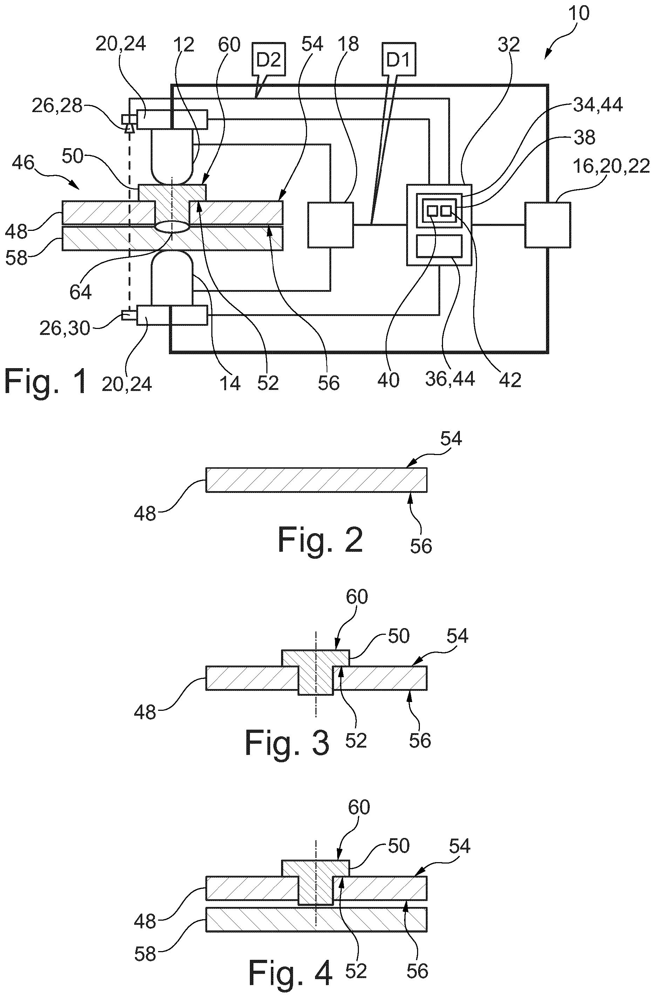

Figure 1 shows a resistance welding apparatus 10.

The resistance welding apparatus 10 comprises a first welding electrode 12 and a second welding electrode 14.

The resistance welding apparatus 10 further comprises an electric power supply unit 16. The electric power supply unit 16 is electrically connected to the first welding electrode 12 and to the second welding electrode 14. Thus, electric current generated by the electric power supply unit 16 is provided to the first welding electrode 12 and to the second welding electrode 16.

The resistance welding apparatus 10 further comprises a resistance measuring unit 18. The resistance measuring unit 18 is electrically connected to the first welding electrode 12 and to the second welding electrode 14. Thus, the resistance measuring unit 18 is configured to measure first data D1 indicative of an electric resistance of a material that is disposed between the first welding electrode 12 and the second welding electrode 14.

Moreover, the resistance welding apparatus 10 comprises a process parameter adjustment unit 20.

A first part 22 of the process parameter adjustment unit 20 is comprised in the electric power supply unit 16. The first part of the process parameter adjustment unit 20 is configured to adjust a welding current that is provided to the first welding electrode 12 and to the second welding electrode 14. This may include a target welding current, a length of a time period during which the welding current is provided to the welding electrodes 12, 14, a pattern of welding current, e.g. alternating current or direct current, or a target course of welding current during welding.

A second part 24 of the process parameter adjustment unit 20 is formed by a movement unit to which the first welding electrode 12 and the second welding electrode 14 is mounted. The movement unit may manipulate a spatial position and a spatial orientation of the first welding electrode 12 and of the second welding electrode 14. In the present example, the movement unit comprises welding tongs to which the first welding electrode 12 and the second welding electrode 14 are attached. Moreover, the movement unit comprises a robot arm (not shown) to which the welding tongs are attached.

The resistance welding apparatus 10 further comprises a distance measuring unit 26. A sending and receiving device 28 of the distance measuring unit 26 is mounted to that part of the movement unit to which the first welding electrode 12 is mounted. A mirroring device 30 of the distance measuring unit 26 is mounted to that part of the movement unit to which the second welding electrode 14 is mounted. Second data D2 indicative of a distance between the first welding electrode 12 and the second welding electrode 14 is obtained from a signal propagation delay that it takes a signal to travel from the sending and receiving device 28 to the mirroring device 30 and back to the sending and receiving device 28. In the present example, the distance measuring unit 26 is of a type of a laser range finder. However, other types of measuring unit, for example ultra sonic and/or radar measuring units are also conceivable.

The resistance welding apparatus 10 further comprises a data processing apparatus 32. The data processing apparatus 32 is communicatively connected to the electric power supply unit 16 and to the first part 22 of the process parameter adjustment unit 20 comprised therein. Moreover, the data processing apparatus 32 is communicatively connected to the resistance measuring unit 18 and to the distance measuring unit 26. Thus, the data processing apparatus 32 is configured to receive first data D1 indicative of an electric resistance of material disposed between the first welding electrode 12 and the second welding electrode 14. The data processing apparatus 32 is also configured to receive second data D2 indicative of a distance between the first welding electrode 12 and the second welding electrode 14. Furthermore, the data processing apparatus 32 is communicatively connected to the second part 24 of the process parameter adjustment unit 20 comprising the movement unit.

The data processing apparatus 32 comprises a data storage unit 34 and a data processing unit 36. The data storage unit 34 comprises a computer-readable storage medium 38. On the computer-readable storage medium 38, there is provided a computer program 40 and a look-up table 42.

The computer program 40 and, thus, also the computer-readable storage medium 38, comprise instructions which, when executed by the data processing unit 36, or, more generally speaking, a computer, cause the computer or the data processing unit 36 to carry out a method for controlling a resistance element welding process.

Consequently, the data storage unit 34 and the data processing unit 36 form means 44 for carrying out the method for controlling a resistance element welding process.

The look-up table 42 comprises information on a suitable target welding currents depending on an electric resistance of an assembly 46 to be welded by resistance element welding. Moreover, the look-up table 42 comprises information on a suitable lengths of time periods during which welding current is provided to the first welding electrode 12 and to the second welding electrode 14 depending on an electric resistance of the assembly 46 to be welded by resistance element welding.

A structure of the assembly 46 to be welded is shown in Figures 2 to 4.

The assembly 46 to be welded comprises a first sheet 48 (see Figure 2). In the present example, the first sheet 48 is an aluminum sheet.

The assembly 46 to be welded further comprises a resistance element 50. The resistance element 50 may also be referred to as a faster. The resistance element 50 is punched through the first sheet 48 such that it abuts with its abutment surface 52 against a first side 54 of the first sheet 48. In this configuration, the resistance element 50 sticks out of a second side 56 of the first sheet 48 (see Figure 3). Thus, a mechanical connection between the first sheet 48 and the resistance element 50 is established.

A second sheet 58 is added at the second side 56 of the first sheet 48. The second sheet 58 contacts the resistance element 50 at that portion of the resistance element 50 that sticks out from the second side 56 of the first sheet 48 (see Figure 4).

A material of the resistance element 50 and of the second sheet 58 may be the same or at least similar to one another. In the present case, both the resistance element 50 and the second 58 sheet are made of steel.

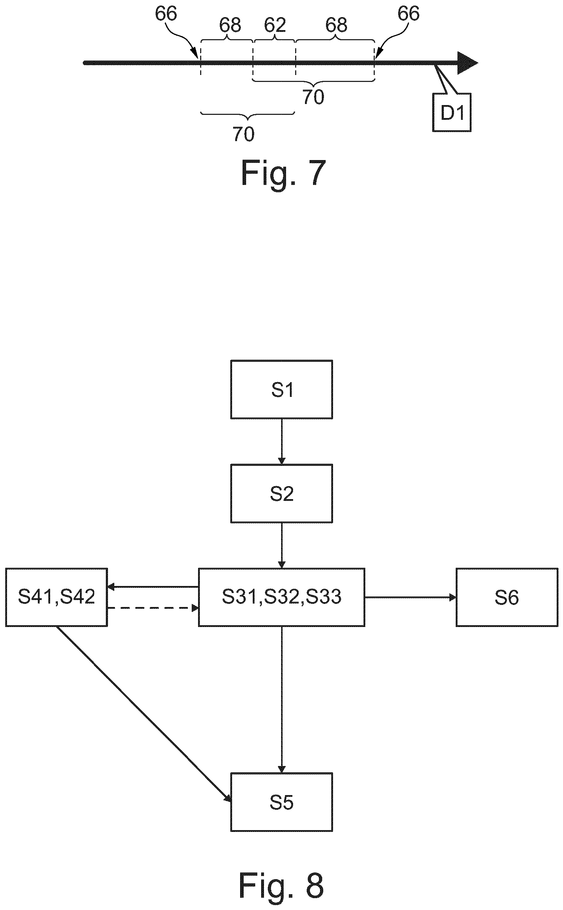

In the following, steps of the method for controlling a resistance element welding process will be explained. Steps of the method are schematically shown in Figure 8.

Figure 1 shows a first scenario of the method for controlling a resistance element welding process.

The assembly 46 to be welded is clamped between the first welding electrode 12 and the second welding electrode 14 by closing welding tongs to which the first welding electrode 12 and the second welding electrode 14 are mounted. The resistance element 50 is contacted centrally on a contact surface 60, which faces away from the first sheet 48 and away from the second sheet 58, by the first welding electrode 12. The second welding electrode 14 is opposite of the first welding electrode 12 with respect to the assembly 46 to be welded. Thus, the second welding electrode 14 contacts the second sheet 58.

In a step S1 of the method, first data D1 indicative of an electric resistance of the assembly 46 to be welded is obtained by the data processing apparatus 32.

The first data D1 is significantly influenced by a contact resistance between the first welding electrode 12 and the resistance element 50, by a resistance of the resistance element 50 itself, by a contact resistance between the resistance element 50 and the second sheet 58, by a resistance of the second sheet 58 itself and by a contact resistance between the second sheet 58 and the second welding electrode 14.

Moreover, the first data D1 is significantly influenced if the first welding electrode 12 contacts the resistance element 50 in the intended spot, here in the center of the contact surface 60, which faces away from the first sheet 48 and away from the second sheet 58, or if the first welding electrode 12 contacts the resistance element 50 in an unintended spot. The latter may be the case because of geometrical tolerances in the assembly 46 to be welded and a consequential uncertainty in an exact position of the resistance element 50.

In the first scenario shown in Figure 1, the first welding electrode 12 contacts the resistance element 50 in the intended spot. The resistance measuring unit 18 determines an electric resistance of the assembly 46 to be welded that is within a resistance range 62 (see Figure 7). The resistance range 62 may also be referred to as a desired resistance range 62.

Thus, in a step S31 of comparing the first data D1 to the resistance range 62, it is determined that the first data D1 indicates an optimum resistance of the assembly 46 to be welded.

Consequently, in a step S5 of the method, resistance element welding of the assembly 46 to be welded is caused. Causing resistance element welding means that the electric power supply unit 16 is caused to provide electric current to the welding electrodes 12, 14. The electric current provided to the welding electrodes 12, 14 travels through the assembly 46 to be welded. At the interface between the resistance element 50 and the second sheet 58, heat is created as a result of the current flow through the assembly 46 to be welded. Both the resistance element 50 and the second sheet 58 are locally melted due to the heat created. Once the electric current is turned off again, the locally melted portions of the resistance element 50 and of the second sheet 58 solidify and form a weld nugget 64 that joins the resistance element 50 to the second sheet 58. Therefore, the electric current provided to the welding electrodes 12, 14 may also be referred to as a welding current.

Since the first sheet 48 has already been mechanically connected to the resistance element 50 by punching the resistance element 50 through the first sheet 48, an indirect connection between the first sheet 48 and the second sheet 58 is established by resistance element welding even though the first sheet 48 and the second sheet 58 comprise a different material.

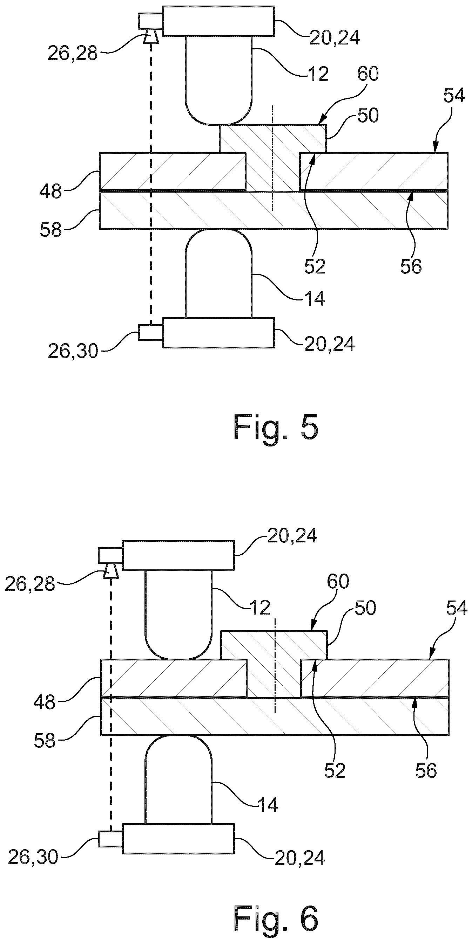

Figure 5 shows a second scenario of the method for controlling a resistance element welding process. Only differences of the second scenario with respect to the first scenario will be explained in the following.

In the second scenario, the first welding electrode 12 contacts the resistance element 50 offset from the desired spot, namely at an edge of the contact surface 60, which faces away from the first sheet 48 and away from the second sheet 58.

Consequently, the first data D1 indicative of an electric resistance of the assembly 46 to be welded as measured by the resistance measuring unit 18 falls outside the resistance range 62.

However, when compared to a resistance threshold 66 that is outside the resistance range 62, the obtained first data D1 is within an interval 68 formed by the resistance threshold 66 and a boundary of the resistance range 62 that is closest to the resistance threshold 66 (step S32).

It is understood that the resistance threshold 66 may be inferior to or greater than any value of the resistance range 62. Also, there may be a resistance threshold 66 on either side of the resistance range 62 (see Figure 7).

In the present example, the obtained first data D1 is above the resistance range 62 but below a resistance threshold 66 that is greater than values of the resistance range 62.

In this case, the process parameter adjustment unit 20 is caused to adjust a process parameter of the resistance element welding process (step S41).

In a first variant of the second scenario Figure 5, the first part 22 of the process parameter adjustment unit 20 increases the target welding current that the electric power supply unit 16 aims to provide to the welding electrodes 12, 14. Moreover, a period of time during which the electric power supply unit 16 provides the welding current to the welding electrodes 12, 14 is increased. Both process parameter adjustments are made in accordance with recommendations stored in the look-up table 42 based on the obtained first data D1 indicative of the electric resistance of the assembly 46 to be welded. This ensures that a sufficient amount of electric current flows through the interface between the resistance element 50 and the second sheet 58 in order to create enough heat for the resistance element 50 and the second sheet 58 to partially melt and consequently weld to each other.

In a second variant of the second scenario shown in Figure 5, the second part 24 of the process parameter adjustment unit 20, namely the movement unit causes the first welding electrode 12 to move to the intended contact point in the center of the contact surface 60 of the resistance element, which faces away from the first sheet 48 and away from the second sheet 58.

The movement of the first welding electrode 12 may be conducted under continuous contact with the resistance element 50. In an alternative, the movement of the first welding electrode 12 may be conducted in incremental steps between which the first welding electrode 12 loses contact with the resistance element 50.

In either case, the movement of the first welding electrode 12 is conducted under surveillance of the first data D1 indicative of an electric resistance of the assembly 46 to be welded. This means that the first data D1 is monitored as the first welding electrode 12 slides along the resistance element 50 or when an incremental step of movement of the first welding electrode 12 has been completed.

A direction of movement of the first welding electrode 12 is changed if the first data D1 develops into a direction further away from the resistance range 62 as the first welding electrode 12 is moved. If the first data D1 is still far away from the resistance range 62, a speed of movement or an incremental step size of movement of the first welding electrode 12 is increased. If the first data D1 is already close to the resistance range 62, the speed of movement or the incremental step size of movement of the first welding electrode 12 is reduced. Thus, it is ensured that the first data D1 quickly reaches a value that is close to the resistance range 62 without overshooting the intended spot of contact between the first welding electrode 12 and the resistance element 50.

In the above explained second variant of the second scenario Figure 5, it is understood that the second welding electrode 14 mirrors any movement of the first welding electrode 12 such that the first welding electrode 12 and the second welding electrode 14 remain opposite one another with respect to the assembly 46 to be welded.

In a third variant of the second scenario of Figure 5, second data D2 indicative of a distance between the first welding electrode 12 and the second welding electrode 14 is obtained by the distance measuring unit 26 (step S2).

In a step S33, the second data D2 is compared to a distance range. The distance range may also be referred to as a desired distance range. If the second data D2 falls within the desired distance range, this indicates that the assembly to be welded including the resistance element 50 is property clamped between the first welding electrode 12 and the second welding electrode 14.

In the present third variant of the second scenario of Figure 5, it is determined that the second data D2 is within the desired distance range. However, it is determined that the first data D1 obtained by the resistance measuring unit 18 is neither within the resistance range 62 nor within an interval 68 formed by the resistance threshold 66 and a boundary of the resistance range that is closest to the resistance threshold. In other words, it is determined that the first data D1 is outside and above an interval 70 between the resistance threshold 66 and a boundary of the resistance range that is furthest from the resistance threshold 66.

In the present case, the first data D1 is above the resistance threshold 66 that is right of the resistance range 62 on the number bar shown in Figure 7. Such a case may be created due to a resistive barrier such as a corrosive layer or an oil firm that covers the resistance element 50 and/or the second sheet 58.

In one alternative, the method may be abandoned at this point (step S6).

However, in the present case, a force applied by the first welding electrode 12 and by the second welding electrode 14 onto the assembly 46 to be welded is increased (step S42) in response. This may break the resistive barrier.

If the first data D1 can be brought into the resistance range 62, resistance element welding may be caused or permitted (step S5). If the first data D1 can be brought into an interval 68 between the resistance threshold 66 and a boundary of the resistance range 62 that is closest to the resistance threshold 66, process parameter adjustments may be conducted (step S41).

Figure 6 shows a third scenario of the method for controlling a resistance element welding process. Only the differences with respect to the first scenario and with respect to the second scenario will be explained in the following.

In the third scenario, the resistance element 50 is not clamped between the first welding electrode 12 and the second welding electrode 14. This is reflected in the second data D2 being outside the desired distance range. Moreover, in the present case, the electric resistance measured between the first welding electrode 12 and the second welding electrode 14 is below the resistance range 62 and below a resistance threshold 66 that is inferior to the resistance range 62.

If electric current was provided to the welding electrodes 12, 14 in such a scenario, no weld would be created between the resistance element 50 and the second sheet 58. Thus, the method of controlling the resistance element welding process is abandoned, i.e. aborted (step S6).

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: resistance welding apparatus
- 12: first welding electrode
- 14: second welding electrode
- 16: electric power supply unit
- 18: resistance measuring unit
- 20: process parameter adjustment unit
- 22: first part of process parameter adjustment unit
- 24: second part of process parameter adjustment unit
- 26: distance measuring unit
- 28: sending and receiving device
- 30: mirroring device
- 32: data processing apparatus
- 34: data storage unit
- 36: data processing unit
- 38: computer-readable storage medium
- 40: computer program
- 42: look-up table
- 44: means for carrying out a method for controlling a resistance element welding process
- 46: assembly to be welded
- 48: first sheet
- 50: resistance element
- 52: abutment surface of resistance element
- 54: first side of first sheet
- 56: second side of first sheet
- 58: second sheet
- 60: contact surface of resistance element
- 62: resistance range
- 64: weld nugget
- 66: resistance threshold
- 68: interval between resistance threshold and boundary of resistance range that is closest to resistance threshold
- 70: interval between resistance threshold and boundary of the resistance range that is furthest from resistance threshold
- D1: first data
- D2: second data

## Claims

1. A method for controlling a resistance element welding process, the method comprising:
- obtaining first data (D1) indicative of an electric resistance of an assembly (46) to be welded (S1),
- comparing the first data (D1) to a resistance range (62) (S31), and
- causing or permitting resistance element welding of the assembly (46) to be welded (S5) if the first data (D1) is within the resistance range (62).

2. The method according to claim 1, wherein the method further comprises:
- comparing the first data (D1) to a resistance threshold (66) (S32), wherein the resistance threshold (66) is outside the resistance range (62), and
- causing adjustment of a process parameter of the resistance element welding process (S41) if the first data (D1) is between the resistance threshold (66) and a boundary of the resistance range (62) that is closest to the resistance threshold (66).

3. The method according to claim 2, wherein adjusting a process parameter comprises modifying a target welding current.

4. The method according to claim 2 or 3, wherein adjusting a process parameter comprises modifying a length of a time period during which the welding current is provided.

5. The method according to any one of claims 2 to 4, wherein adjusting a process parameter comprises adjusting a spatial position of a first welding electrode (12) and/or of a second welding electrode (14).

6. The method according to claim 5, wherein a direction of adjusting the spatial position of the first welding electrode (12) and/or of the second welding electrode (14) is based on a development of the first data (D1) over at least two spatial positions of the first welding electrode (12) and/or the second welding electrode (14) relative to the resistance range, and/or
wherein an incremental step size or a speed of movement in adjusting the spatial position of the first welding electrode and/or of the second welding electrode is based on a development of the first data over at least two spatial positions of the first welding electrode and/or the second welding electrode relative to the resistance range.

7. The method according to any of the preceding claims, further comprising:
- obtaining second data (D2) indicative of a distance between the first welding electrode (12) and the second welding electrode (14) (S2).

8. The method according to claim 7, further comprising:
- comparing the second data (D2) to a distance range (S33), and
- increasing a pressure and/or a force applied by the first welding electrode (12) and/or by the second welding electrode (14) onto the assembly (46) to be welded (S42) if the second data (D2) is within the distance range and if the first data (D1) is outside and above an interval (70) between the resistance threshold (66) and a boundary of the resistance range (62) that is furthest from the resistance threshold (66).

9. The method according to any of the preceding claims, wherein the method is abandoned prior to performing resistance element welding of the assembly (46) to be welded (S6) if at least one of the following conditions is met:
- the first data (D1) is outside the interval (70) between the resistance threshold (66) and a boundary of the resistance range (62) that is furthest from the resistance threshold (66), or
- the second data (D2) is outside the distance range.

10. A data processing apparatus (32) comprising means (44) for carrying out the method of any one of the preceding claims.

11. A computer program (40) comprising instructions which, when the program is executed by a computer, cause the computer to carry out the method of claims 1 to 9.

12. A computer-readable storage medium (38) comprising instructions which, when executed by a computer, cause the computer to carry out the method of claims 1 to 9.

13. A resistance welding apparatus (10) comprising:
- a first welding electrode (12),
- a second welding electrode (14),
- a resistance measuring unit (18) connected to the first welding electrode (12) and to the second welding electrode (14) for providing first data (D1) indicative of an electric resistance of an assembly (46) to be welded, and
- a data processing apparatus (32) according to claim 10,
wherein the data processing apparatus (32) is communicatively connected to the resistance measuring unit (18).

14. The resistance welding apparatus (10) according to claim 13, further comprising a process parameter adjustment unit (20, 22, 24), wherein the process parameter adjustment unit (20, 22, 24) is communicatively connected to the data processing apparatus (32).

15. The resistance welding apparatus (10) according to claim 13 or 14, further comprising a distance measuring unit (26) for providing second data (D2) indicative of a distance between the first welding electrode (12) and the second welding electrode (14), wherein the distance measuring unit (26) is communicatively connected to the data processing apparatus (32).
